# EUROPEAN PATENT APPLICATION

(11) **EP 4 488 150 A1**
(43) Date of publication of application: **08.01.2025**
(21) Application number: 23763531.3
(22) Date of filing: 02.03.2023
(51) Int. Cl.: B62J 6/028, B60Q 1/00, B60Q 1/02, B60Q 1/26, B62J 6/26, F21L 2/00, F21S 9/02, F21S 41/148, F21S 41/19, F21S 41/32, F21S 43/14, F21S 43/20, F21S 45/10, F21V 9/40, F21V 14/04, F21W 102/10, F21W 103/60, F21W 105/00, F21W 107/13, F21Y 115/10

(54) **BICYCLE LIGHTING DEVICE**

(30) Priority: 04.03.2022 JP 2022033069
(71) Applicant: Stanley Electric Co. Ltd., Tokyo 153-8636 (JP)
(72) Inventor: TSUCHIYA Maiko, Tokyo 153-8636 (JP); YONEYA Takayuki, Tokyo 153-8636 (JP); HONNA Yuya, Tokyo 153-8636 (JP); NAKAO Misuzu, Tokyo 153-8636 (JP)
(74) Representative: Klang, Alexander H.
(86) International application number: PCT/JP2023/007745
(87) International publication number: WO 2023/167274

(57) **Abstract**

A bicycle lighting device (10) includes a central light emitting unit (11) that is provided in a central region in a single housing when seen in a front view and that illuminates a front surface in a traveling direction, a right light emitting unit and a left light emitting unit that are provided on both sides of the central light emitting unit, and a control board. A drawing optical system constituted by an LED light source (21) and an image forming part (25) is provided in at least one of the right light emitting unit (12R) and the left light emitting unit (12L). The central light emitting unit (11) irradiates a narrow light distribution pattern that complies with headlight standards. The drawing optical system draws a predetermined image toward a road surface at the side compared to the light distribution pattern of the central light emitting unit (11).

## Description

### [Technical Field]

The present invention relates to a bicycle lighting device, and more particularly, to an illumination device for a bicycle, in particular, a headlight for a bicycle having a light emitting part configured to illuminate a center of a front surface in a direction of advance when seen in a plan view, and a light emitting part configured to draw predetermined designs toward left and right road surfaces near a bicycle.

Priority is claimed on Japanese Patent Application No. 2022-033069, filed March 4, 2022, the content of which is incorporated herein by reference.

### [Background Art]

In a headlight for a bicycle in the related art, in general, only one light emitting part radiates light in an illuminating direction using an incandescent light source (for example, see Patent Document 1). In addition, to improve safety, an illuminating device with a light source that turns on when turning left or right has also been proposed (for example, see Patent Document 2).

An illuminating unit for a bicycle disclosed in Patent Document 1 includes an illuminance detecting part that is configured to detect surrounding brightness inside a main body case, and a luminous body constituted by a reflecting plate and a small incandescent bulb, and that controls turning on/off of the small incandescent bulb on the basis of the illuminance detected by an illuminance sensor.

An illuminating unit for a bicycle disclosed in Patent Document 2 includes an illuminating unit constituted by a central lamp, a left facing lamp configured to illuminate a left front side and a right facing lamp configured to illuminate a right front side, a rotation detecting part configured to detect predetermined rotation about an axis, and a lamp driving part configured to control a lighting status of the left facing lamp and the right facing lamp on the basis of the detected signal of the rotation detecting part. The illuminating unit is mounted on the bicycle such that the central lamp illuminates an area in front of the bicycle, in a direction toward which the front wheel operated by a handle is directed.

### [Citation List]

### [Patent Document]

[Patent Document 1]
   Japanese Unexamined Patent Application, First Publication No. 2003-019988
[Patent Document 2]
   Japanese Unexamined Patent Application, First Publication No. 2018-62260

### [Summary of Invention]

### [Technical Problem]

The bicycle lighting device disclosed in Patent Document 1 can illuminate a forward side in a direction of advance but cannot illuminate the left front and the right front.

The illuminating unit for a bicycle disclosed in Patent Document 2 can selectively illuminate the left front or the right front depending on the detected signal of the rotation detecting part in addition to the front side in the direction of advance. While it has been simply described in that the central lamp is always turned on, the illuminance is changed according to a steering angle of the handle and the left facing lamp or the right facing lamp is turned on, there is no specific description regarding light distribution of the left facing lamp or the right facing lamp.

In addition, in the illuminating device for a bicycle disclosed in Patent Document 1 and Patent Document 2, while it has been described that visibility in front of the vehicle is increased for a bicycle driver, there is no description of sending a message to drivers of other vehicles such as other bicycles or the like or to other pedestrians around the bicycle, from their viewpoint.

A main objective of the present invention is directed to realizing a bicycle lighting device equipped with a lamp unit having a function of drawing a predetermined design on a road surface of a left front side and/or a right front side in front of a bicycle driver in order to improve safety of the bicycle.

### [Solution to Problem]

An aspect of the present invention provides a bicycle lighting device of the following (1) to (5) and a bicycle of the following (6).
(1) A bicycle lighting device including:
   a central light emitting unit that is provided in a central region when seen in a front view and that is configured to emit light forward;
   a right light emitting unit that is provided to be shifted rightward from a centerline of the central light emitting unit when seen from the centerline and that is configured to emit light toward a closer area at right front compared to the central light emitting unit;
   a left light emitting unit that is provided to be shifted leftward from the centerline of the central light emitting unit when seen from the centerline and that is configured to emit light toward a closer area at left front compared to the central light emitting unit;
   a control board including a lighting drive circuit configured to control a lighting status of each of the central light emitting unit, the right light emitting unit and the left light emitting unit; and
   a housing including a lamp chamber configured to accommodate the central light emitting unit, the right light emitting unit, the left light emitting unit and the control board,
   wherein the housing is provided with a fixing part to fix the housing to a bicycle,
   a drawing optical system constituted by an LED light source and an image forming part, which is provided in front of the LED light source in an irradiating direction of the LED light source, is provided in at least one of the right light emitting unit and the left light emitting unit, and
   the drawing optical system is configured to emit irradiation light so as to draw a predetermined image toward a road surface which is closer compared to a light distribution pattern of the central light emitting unit.
(2) The bicycle lighting device according to the above-mentioned (1), wherein the image forming part of at least one of the right light emitting unit and the left light emitting unit includes an image film fixing frame in at least one of the right light emitting unit and the left light emitting unit, and has an image film that is able to be inserted into or removed from the image film fixing frame.
(3) The bicycle lighting device according to above-mentioned (1), wherein the image forming part of at least one of the right light emitting unit and the left light emitting unit is a variable image forming part configured to change a design using an electrical means.
(4) The bicycle lighting device according to any one of the above-mentioned (1) to (3), wherein the control board includes a first control part configured to control a lighting status of a light source of the central light emitting unit, and a second control part configured to control a lighting status of a light source of each of the right light emitting unit and the left light emitting unit,
   the first control part performs continuous lighting according to an output signal of an illuminance sensor or a switching operation, and
   the second control part performs blinking lighting independently from the lighting of the light source of the central light emitting unit by the first control part.
(5) The bicycle lighting device according to any one of the above-mentioned (1) to (4), wherein the light source of each of the central light emitting unit, the right light emitting unit and the left light emitting unit is an LED.
(6) A bicycle including the bicycle lighting device according to any one of the above-mentioned (1) to (5).

### [Advantageous Effects of Invention]

According to the aspect of the present invention, the bicycle lighting device has the function of drawing a predetermined design onto the road surface in front of the bicycle in the direction of advance as well as on the left and/or right front side of the road surface, widening the irradiation range of the road surface and making the area around the driver's feet brighter and easier to use. Further, road surface drawings can also be used to inform not only drivers but also people around, automobiles, bicycles, and others of the presence of bicycles. Accordingly, it is possible to increase the safety of bicycle traveling.

In addition, according to the aspect of the present invention according to the above-mentioned (2) or (3), the drawing optical system can allow the predetermined image drawn on the road surface to be changed, giving different impressions to the driver and/or those around. In addition, according to the aspect of the present invention according to the above-mentioned (4), it is possible to improve recognizablility of predetermined images drawn on the road surface. In addition, according to the aspect of the present invention according to the above-mentioned (5), since the light sources of the central light emitting unit, the right light emitting unit and the left light emitting unit are all LEDs, the control circuit thereof can be standardized and simplified.

### [Brief Description of Drawings]

FIG. 1 is a schematic side view showing a schematic side view showing a vehicle (bicycle) to which a bicycle lighting device according to an embodiment of the present invention is attached.
FIG. 2 is a schematic perspective view showing the bicycle lighting device of the embodiment viewed in a diagonal upward direction on a side in front of the bicycle.
FIG. 3 is a schematic cross-sectional view showing a horizontal cross section of the bicycle lighting device of the embodiment.
FIG. 4 is a vertical cross-sectional view for describing an optical system of a central light emitting unit of the embodiment.
FIG. 5 is a schematic longitudinal cross-sectional view for describing a left light emitting unit.
FIG. 6 is a block diagram for describing lighting control of the bicycle lighting device.
FIG. 7 is a schematic view showing an equal illuminance curve that indicates a road surface irradiating pattern or the like of the bicycle lighting device.
FIG. 8A is a view for describing a design that exemplifies a specific example of a pattern of road surface drawing in a road surface irradiating pattern shown by a dotted line in FIG. 7.
FIG. 8B is a view for describing a design that exemplifies a specific example of a pattern of road surface drawing in a road surface irradiating pattern shown by the dotted line in FIG. 7.
FIG. 8C is a view for describing a design that exemplifies a specific example of a pattern of road surface drawing in a road surface irradiating pattern shown by the dotted line in FIG. 7.
FIG. 8D is a view for describing a design that exemplifies a specific example of a pattern of road surface drawing in a road surface irradiating pattern shown by the dotted line in FIG. 7.
FIG. 9A is a schematic view showing a bicycle lighting device of a second embodiment.
FIG. 9B is a schematic view showing the bicycle lighting device of the second embodiment.
FIG. 10A is a schematic plan view for describing a road surface irradiating pattern radiated by the bicycle lighting device.
FIG. 10B is a schematic plan view for describing a road surface irradiating pattern radiated by the bicycle lighting device.
FIG. 10C is a schematic plan view for describing a road surface irradiating pattern radiated by the bicycle lighting device.

### [Description of Embodiments]

Hereinafter, a lighting tool for a vehicle according to the present invention will be described with reference to the accompanying drawings while exemplifying appropriate embodiments. In the following description, descriptions of "forward," "rearward," "leftward," "rightward," "upward" and "downward" indicate directions seen from a driver while a vehicle (bicycle) is installed. Accordingly, "forward" corresponds to a forward side of a vehicle (a direction of advance of a bicycle) that is a main radiating direction of light from a headlight, "rearward" corresponds to a rear side of the vehicle (a back surface direction of a driver), "leftward" corresponds to a left side with reference to the traveling direction of the vehicle, and "downward" corresponds to a road surface side (a driver's foot side).

### (First embodiment)

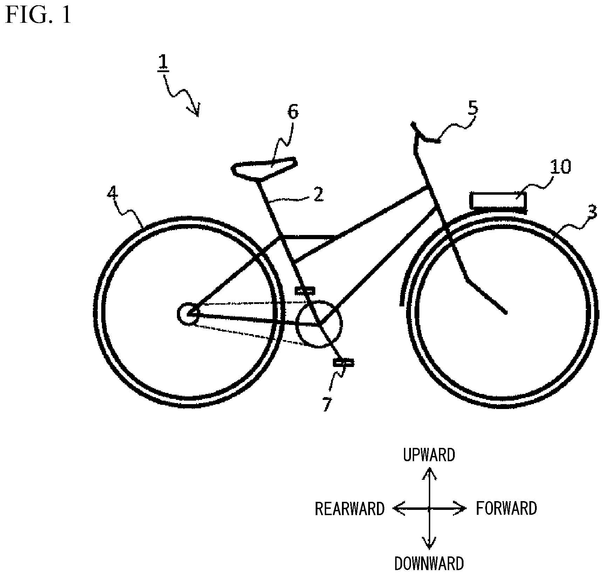

FIG. 1 is a schematic side view showing a vehicle (bicycle) to which a bicycle lighting device according to an embodiment of the present invention is attached. A bicycle 1 has a configuration in which a front tire 3, a rear tire 4, a handle 5, a saddle 6 and a pedal 7 are provided around a frame 2. The front tire 3 is pivoted in conjunction with steering of the handle 5, and a headlight 11 is fixed so as to pivot in conjunction with the front tire 3. A taillight (not shown) is provided on the rear tire 4 or the frame 2.

The headlight 11 and the taillight are one of types of the bicycle lighting device. The headlight 11 is a lighting device that emits white light forward to enable a driver to see an obstacle on a road surface at nighttime or when a field of vision is poor. The taillight is a lighting device that emits red light to indicate presence of the bicycle 1 from behind at nighttime or when a field of vision is poor.

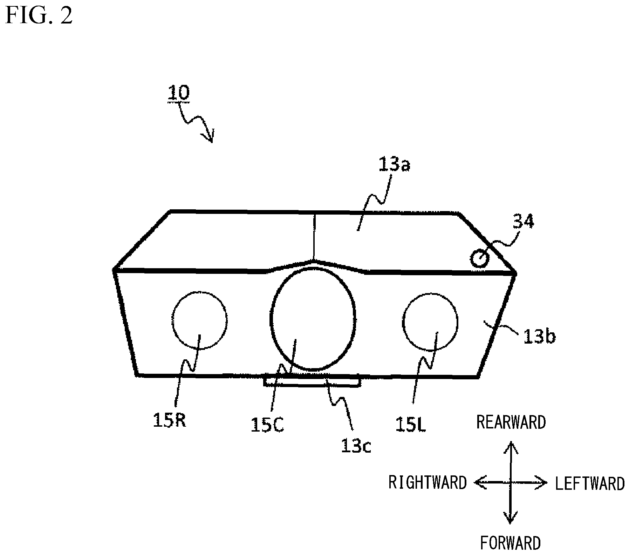

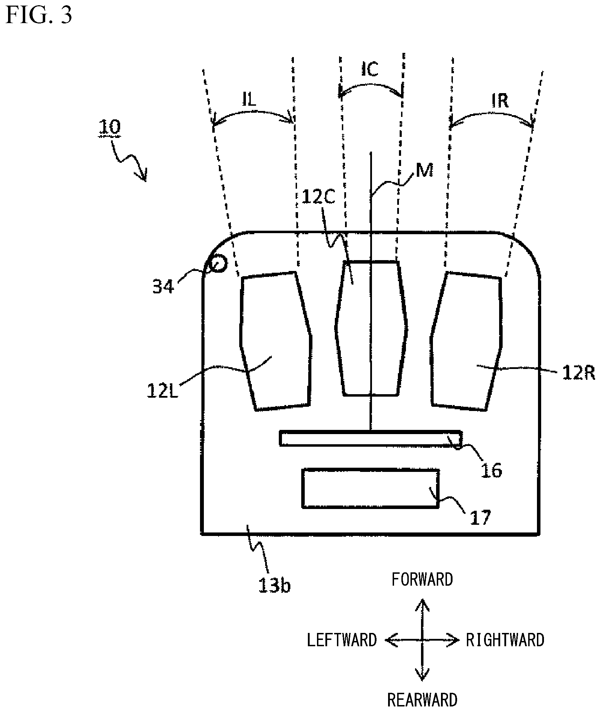

FIG. 2 is a schematic perspective view showing a bicycle lighting device 10 of the embodiment viewed from a diagonal upward direction on a front side of the bicycle. FIG. 3 is a schematic perspective view showing a horizontal cross section of the bicycle lighting device 10 of the embodiment. In the embodiment, the bicycle lighting device 10 accommodates a lamp unit that functions as the headlight 11 and serves as a forward illuminating device for a bicycle that illuminates a side in front of the bicycle. Further, the bicycle lighting device 10 also accommodates a drawing lamp unit that projects a predetermined design onto a road surface in front and close thereof. Specifically, a central light emitting unit 11 provided in a central region when viewed from the front corresponds to the headlight 11 and is configured to emit light toward the side in front of the bicycle. Further, drawing lamp units 12 constituted by a pair of lamp units are disposed on both sides of the central light emitting unit. When seen in a plan view, a left light emitting unit 12L is provided at a position shifted to the left of a centerline M of the central light emitting unit 11, and is formed so as to emit light toward a closer area at the left front compared to the central light emitting unit 11. When seen in a plan view, a right light emitting unit 12R is provided at a position shifted to the right of the centerline M of the central light emitting unit 11, and is formed so as to emit light toward a closer area at the right front of the central light emitting unit 11.

The central light emitting unit 11 and the drawing lamp unit 12 are fixed into a housing 13. The housing 13 is a substantially box-shaped case having a lamp chamber 14, a front side of which is opened. An outer lens 15 formed of a translucent resin is attached to the front opening, and transmits the light radiated from the central light emitting unit 11 and the drawing lamp unit 12 installed in the lamp chamber 14 to the outside.

### (Outer lens)

The outer lens 15 is described as being transparent, but it may be provided with a refractive lens that refracts the light emitted from each lamp unit. A fixing part 13C configured to be fixed to the bicycle is formed on a bottom surface of the housing 13. The fixing part 13C is attached to a mudguard of the front tire 3 using a fixing means such as a screw to pivot in conjunction with the front tire 3 of the bicycle. In the embodiment, when seen in a front view as shown in FIG. 2, an elliptical window part 15C formed at a position corresponding to the central light emitting unit 11 and portions of circular window parts 15R and 15L corresponding to the drawing lamp units 12 (the right light emitting unit 12R and the left light emitting unit 12L) are formed of a light-transmitting resin material, and places other than the above mentioned positions are provided with a colored resin material which is difficult to see the inside of the lamp chamber 14.

### (Housing)

The housing 13 is constituted by a bottomed lower housing 14a having an accommodating concave part that becomes the lamp chamber 14 on an upper side, and an upper housing 14b configured to cover the accommodating concave part. A lamp unit attachment part to which the central light emitting unit 11 and the drawing lamp unit 12 are fixed on a front side, and a control device attachment part to which a battery 16 and a control board 17 are fixed on a rear side are provided in the accommodating concave part. As shown in FIG. 3, the control board 17 is disposed to be inserted into the lower housing 14a from above to be located between the battery 16, the central light emitting unit 11 and the drawing lamp unit 12 in a state in which a plate thickness direction is parallel to the upward/downward direction. The outer lens 15, the battery 16, the central light emitting unit 11 and the drawing lamp unit 12 are also formed to be inserted into the lower housing 14a from above, and formed to be fixed by performing an assembly work from above by attachment. Accordingly, assembly man-hours can be simplified.

### (Central light emitting unit)

The central light emitting unit 11 irradiates light toward a range of an irradiation angle IC as shown in FIG. 3, centered on a center axis M, so as to form a light distribution pattern that satisfies a light distribution standard for a bicycle headlight. As the light distribution standard for a bicycle headlight, there are light distribution properties defined in JIS standard number JISC9502 "bicycle lighting device." It is required to have a predetermined illuminance value at a predetermined measurement position measured on a vertical screen 10 m in front of the headlight and must meet the light distribution properties of a) a light distribution for passing or c) general purpose light distribution, or both a) light distribution for passing and b) light distribution for traveling. The predetermined measurement position is, for example, in the revised version on March 22, 2021, a position HV (an intersection between line H-H showing a horizontal surface parallel to the ground and line V-V showing a vertical surface passing through the bicycle), positions A1 and A2 (intersections located on line H-H at an interval of 4° on left and right sides from line V-V), and a position A3 (a point located on line V-V and below 3.5° from line H-H) in the case of c) light distribution properties of the general purpose light distribution. In this way, the light distribution pattern for a bicycle headlight has a main light distribution range of 4 degrees to the left and right of line V-V, and although it has the ability to illuminate the range up to 10 meters away, it tends to have light distribution properties with a narrow spread in the leftward/rightward direction.

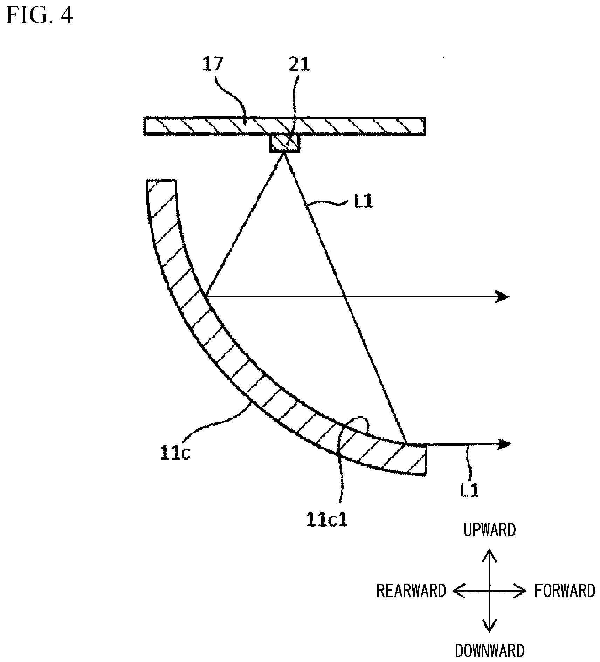

FIG. 4 is a vertical cross-sectional view for describing an optical system of the central light emitting unit 11 of the embodiment. In the embodiment, the central light emitting unit 11 has an LED light source 11a shown in FIG. 4, a thermal conductive board 11b on which the LED light source 11a is mounted, and a reflector 11c configured to reflect first light L1 emitted from the LED light source 11a in a forward direction. A plurality of reflecting surfaces 11c1 are formed on the reflector 11c such that the light emitted from the LED light source 11a forms a light distribution pattern that satisfies a light distribution standard for a bicycle headlight. The reflecting surfaces 11c1 include a paraboloid of revolution with the LED light source 11a as its focus position, the other reflecting surfaces are the reflecting surfaces of a parabolic system that is similar to this reflecting surface, and the first light L1 reflects light that contains a large amount of parallel rays. The LED light source 11a is a chip LED (surface-mounted LED package) that emits white light as the first light L1. In addition, the chip LED is disposed on a surface of the thermal conductive board 11b. The thermal conductive board 11b is fixed to the reflector 11c and constitutes an optical system configured to radially emit the first light L1 toward a reflector 10B provided below, and an independent lamp unit is formed by being fixed to an outer frame (not shown). The outer frame is fixed by being attached to the housing 13. In addition, a thermal conductive board (light source board) 11b on which the LED light source 11a is mounted and the control board 17 on which a drive circuit configured to drive the LED light source 11a is provided are separately disposed in the lamp chamber 14, electrically connected via a wiring cord referred to as a harness, and formed to protect the drive circuit from heat emitted from the LED light source 11a by being separately provided.

In the embodiment, by adjusting a plurality of reflecting surfaces 11c, an irradiation range on the screen is designed to be a horizontal light distribution centered on the optical axis. Specifically, when an angle (°) centered on the optical axis is plotted on the lateral axis and the luminous intensity (cd) is plotted on the longitudinal axis, a symmetric shape is approximately 6° in the leftward/rightward direction, and made narrow at approximately 5° in the upward/downward direction. However, in the upward/downward direction, an upward angle is set to 5° or less, and in the downward direction, the brightness is set to 20 to 25% of the maximum illuminance, with a broad skirt shape from 5° to 10°, creating asymmetric properties to increase the amount of irradiation onto the road surface. The plurality of reflecting surfaces 11c may be adjusted and a refractive lens may be provided below the window part 15C of the outer lens to increase the amount of downward light.

### (Drawing lamp unit)

The drawing lamp unit 12 is a lamp unit configured to irradiate a predetermined drawing pattern radiated from the central light emitting unit 11 to a road surface of a diagonal side in front of the bicycle. In the embodiment, as shown in FIG. 2 and FIG. 3, one independent lamp unit is disposed on each side of the central light emitting unit 11. The left light emitting unit 12L and the right light emitting unit 12R each have an independent optical system and can be controlled to be turned on and off independently.

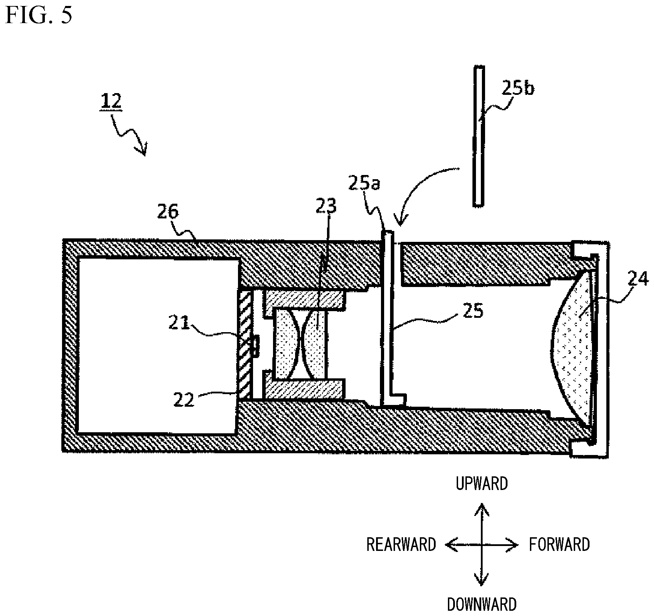

FIG. 5 is a schematic longitudinal cross-sectional view for describing the left light emitting unit 12L. Further, since the right light emitting unit 12R has the same configuration as the left light emitting unit 12L, description of the configuration of the right light emitting unit 12R will be omitted. The left light emitting unit 12L includes an LED light source 21, a thermal conductive board 22 on which the LED light source 21 is mounted, two condenser lenses 23 configured to convert second light L2 emitted from the LED light source 21 into parallel rays, a projection lens 24 configured to project the second light L2 emitted from the condenser lenses 23 forward, and an image forming part 25 disposed between the condenser lenses 23 and the projection lens 24, and constitutes a drawing optical system. The thermal conductive board 22, the condenser lenses 23, the image forming part 25 and the projection lens 24 are fixed to an outer frame 26. The outer frame 26 is provided with screw holes (not shown), and is configured so that it can be detachably fixed to a lower housing 13a of the bicycle lighting device 10 by screwing it thereto. Instead of using the two condenser lenses 23 to convert the light into parallel rays, a single lens or a reflector may be used to cause the second light L2 emitted from the LED light source 21 to enter the projection lens 24.

The image forming part 25 is a part that forms an image to be projected onto the road surface using the second light L2 emitted from the LED light source 21. In the embodiment, an image film fixing frame 25a, which has an opening at a position corresponding to the condenser lenses 23, is fixed to the outer frame 26, and an image film 25b, which is separately prepared, can be inserted and removed from above the image film fixing frame 25a. The image film 25b has desired designs such as figures, characters, or the like, which are to be drawn on the road surface, drawn on a transparent film by a technique such as printing or the like. The transparent film that is a base material is preferably a material with good translucency and small deformation due to heat, for example, a glass plate, and more preferably tempered glass having high resistance to vibrations. In addition, a transparent resin plate such as acryl resin, polycarbonate, or the like, may be used. A design can be drawn on a surface of a thin-film-shaped glass with a thickness of 0.1 mm, and the glass film can also be sandwiched on both sides, for example, with acrylic resin having a thickness of 2 mm to form the image film 25b. In addition, a design can also be drawn by forming a window (transmissive part) corresponding to an arbitrary design in a metal plate. An arbitrary image can be projected and drawn onto the road surface by replacing the image film 25b in this way. Further, in the embodiment, while the image film 25b is physically replaceable, it may be fixed to the frame rather than being replaceable. Further, although the cost is higher, the image forming part 25 can be made variable in design by an electrical means. For example, a liquid crystal element in which a plurality of pixels are provided is disposed at a position of the image film fixing frame 25a. When the transmitted light is modulated by controlling electrical switching of each of the pixels of the liquid crystal element, the image can be changed. In addition, it is also possible to use a laser light source as the light source and draw the image by controlling the reflecting direction of the light from the laser light source using a mirror that can be electrically controlled.

The irradiation light from the left light emitting unit 12L illuminates the road surface in a diagonal left direction in front of the vehicle, and draws an image formed by the image forming part 25 on the road surface. The light distribution standard of the headlight for a bicycle is a narrow range centered on an optical axis as described above. That is, it is sufficient to meet the predetermined illuminance values at positions 4° left and right on the screen 10 m in front of the headlight. For this reason, simply satisfying the light distribution standard will result in the road surface in front of one's bicycle becoming dark, especially in the regions more than 4° to the left and right. The left light emitting unit 12L irradiates the light mainly toward a region which is directed at an angle greater than 4° to the left and which is closer than 10 m in front. Similarly, the right light emitting unit 12R irradiates the light mainly to a region which is directed at an angle greater than 4° to the right and which is closer than 10 m in front. In the embodiment, as described above, the central light emitting unit 11 also has asymmetric light distribution properties in the upward/downward direction to irradiate the light to a wide angle downward, i.e., on the road surface side. Accordingly, the bicycle lighting device 10 has the central light emitting unit 11 that emits the light to the center along the optical axis of the road surface closer than 10 meters ahead, and the left light emitting unit 12L and the right light emitting unit 12R that emit the light diagonally toward the closer area in the left and right, respectively. Accordingly, the irradiation range of the road surface can be widened, making the area under the driver's feet brighter and easier to use. Further, each of the left light emitting unit 12L and the right light emitting unit 12R draws an image formed by the image forming part 25 on the road surface. Accordingly, it is possible to provide information corresponding to the projected image not only to the driver but also to people, automobiles, bicycles, and others, around the vehicle.

### (Control board, battery)

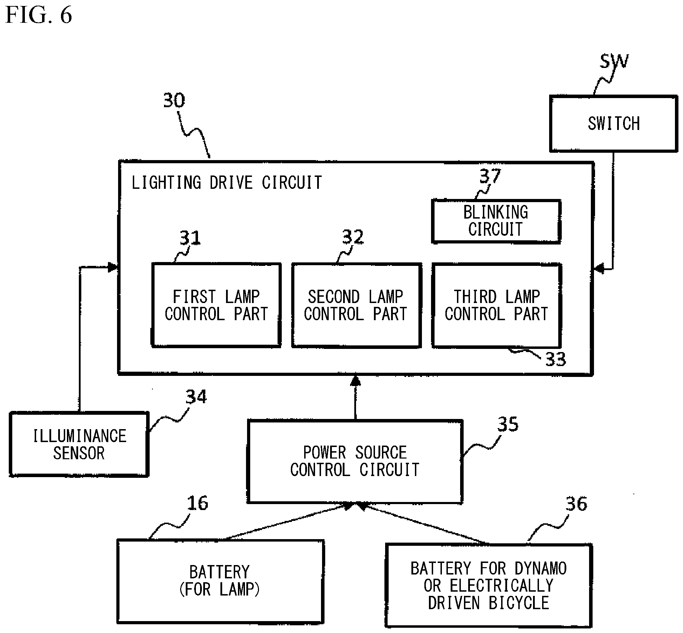

The battery 16 and the control board 17 are fixed to a lamp unit attachment part of the lower housing 13a. In the control board 17, a connector (not shown) and a connector on which circuit parts are provided are electrically connected to an LED light source of each light emitting unit by a harness connected to a light source board 1 1b of the central light emitting unit 11 and a harness connected to a light source board 22 of each of the left light emitting unit 12L and the right light emitting unit 12R. FIG. 6 is a block diagram for describing lighting control of the bicycle lighting device 10. The control board 17 is provided with a lighting drive circuit 30 and a power source control circuit.

The lighting drive circuit 30 includes a first lamp control part 31, a second lamp control part 32 and a third lamp control part 33, which are connected to the central light emitting unit 11, the left light emitting unit 12L and the right light emitting unit 12R, respectively, and configured to independently control a lighting status of the light source of each of the light emitting units, and a blinking circuit 37 configured to blink the left light emitting unit 12L and the right light emitting unit 12R. In addition, a switch SW configured to allow a driver to arbitrarily perform lighting control switching of the bicycle lighting device 10 is connected thereto. Further, an illuminance sensor 34 is connected to the lighting drive circuit 30 to input an output signal thereto. In addition, output of a power source control circuit 35 is input to the lighting drive circuit 30. The power source control circuit 35 is a circuit accommodated in the housing 13 and configured to supply power appropriate for lighting of each of the light emitting units 11, 12L and 12R using the output of the battery 16 configured to turn on each of the light emitting units. In addition, an external power source 36 is also connected to the power source control circuit 35 and supplies electric power to supplement or in place of the battery 16. The battery 16 is a secondary battery, for example, a dry cell battery, a rechargeable nickel-metal hydride battery, or the like. The external power source 36 may be, for example, a dynamo or, a drive power source for an electric bicycle if the bicycle is an electric bicycle.

The illuminance sensor 34 is fixed to the lower housing 13a as shown in FIG. 3, and outputs a signal depending on brightness of external light entering through a transparent window (not shown) provided on an upper housing 13b. The central light emitting unit 11 is set to light up when the output value from the illuminance sensor 34 becomes a signal with an output value that corresponds to the illuminance being darker than the value (first threshold) when the illuminance is darker than that of the predetermined brightness. The left light emitting unit 12L and the right light emitting unit 12R are set to be able to light up at a second threshold different from the first threshold. The second threshold is a value corresponding to the output value that is brighter than the brightness corresponding to the first threshold. Accordingly, for example, at dusk, road surface drawing can be performed earlier than when the central light emitting unit 11 is turned on, and it is possible to warn people in the surrounding area while it is still light and before it gets dark.

The blinking circuit 37 is connected to each of the left light emitting unit 12L and the right light emitting unit 12R and blinks each of the LED light source 21 independently. By blinking each of the left light emitting unit 12L and the right light emitting unit 12R, the vehicle can be more easily noticed by those around it, improving its recognizablility. In addition, the blinking circuit 37 may be omitted when the blinking is not performed. In addition, since the light sources of the central light emitting unit, the right light emitting unit and the left light emitting unit are all LEDs, their control circuits can be standardized and simplified.

### (Road surface light distribution pattern)

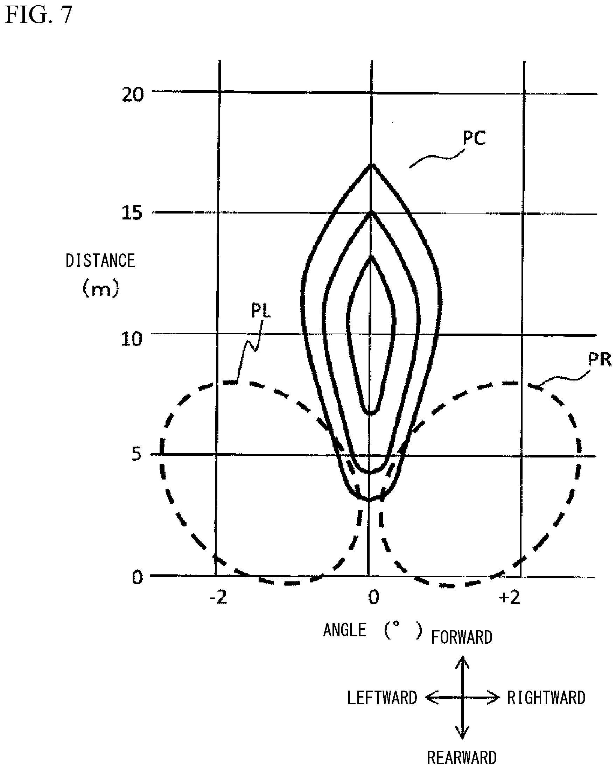

FIG. 7 is a schematic view showing an equal illuminance curve that indicates a road surface irradiating pattern of the bicycle lighting device 10. This is the light distribution pattern when the bicycle lighting device 10 is installed 1 meter from the road surface with the optical axis of the central light emitting unit 11 tilted 5° downward and the light emitted toward the road surface (horizontal surface). A lateral axis is the angle (°) centered on the optical axis (0°), and a longitudinal axis is a distance (m) from the bicycle lighting device 10. A road surface irradiating pattern PC of the central light emitting unit 11 is shown by an equal illuminance curve in practice, and the road surface irradiating patterns PL and PR of the left light emitting unit 12L and the right light emitting unit 12R are shown by dotted lines as irradiation ranges, respectively. Since the left light emitting unit 12L and the right light emitting unit 12R project the images formed by the image forming part 25 onto the road surface, they are shown in the irradiation range rather than the image projected onto the road surface.

As can be seen from FIG. 7, the road surface irradiating patterns PL and PR of the drawing lamp unit 12 emit light obliquely to the side at a closer distance than the road surface irradiating pattern PC of the central light emitting unit 11. In particular, it is easier to draw without overlapping the road surface irradiating pattern PC of the central light emitting unit 11 if the drawing is performed close within 5 meters in front, preferably within a range of 2 to 3 meters, and within a range of 2 to 4 degrees to the left and right. Further, since the design is drawn on the road surface which is near the bicycle and separated from the bicycle, it becomes easier for pedestrians and drivers of other vehicles to recognize the design and it becomes easier also for them to recognize which bicycle's road surface drawing pattern it is. In addition, as a simple experiment, a drawing pattern with an illuminance of 1000 lx when irradiated at a distance of 1 m has the illuminance of 300 lx at a distance of 2 m, and has the illuminance of 100 lx at a distance of 4 m. The results of this experiment suggest that although the results may differ depending on factors such as the optical system used for illumination, the brightness of the light source, and the drawing pattern, the general trend is likely to be similar, and that a distance of up to about 5 m is a practical distance for recognizing a design drawn onto the road surface. If the distance is more than 5 m, the pattern will be too far away from your own bicycle and it will be difficult to recognize the pattern relationship with the bicycle that performs drawing. Accordingly, it is preferable to perform road surface drawing at a position close to the bicycle which is performing the drawing and at a position diagonally in front thereof. It is preferable to draw a size of at least 1 m in length with a distance of 4 m to 5 m as the center, and to make the brightness sufficient to make it recognizable. In addition, considering the illuminating function when driving, it is difficult to use the drawing if it is too close to a bicycle. Accordingly, the above range is a drawing region that is well-balanced for both the bicycle driver and those around.

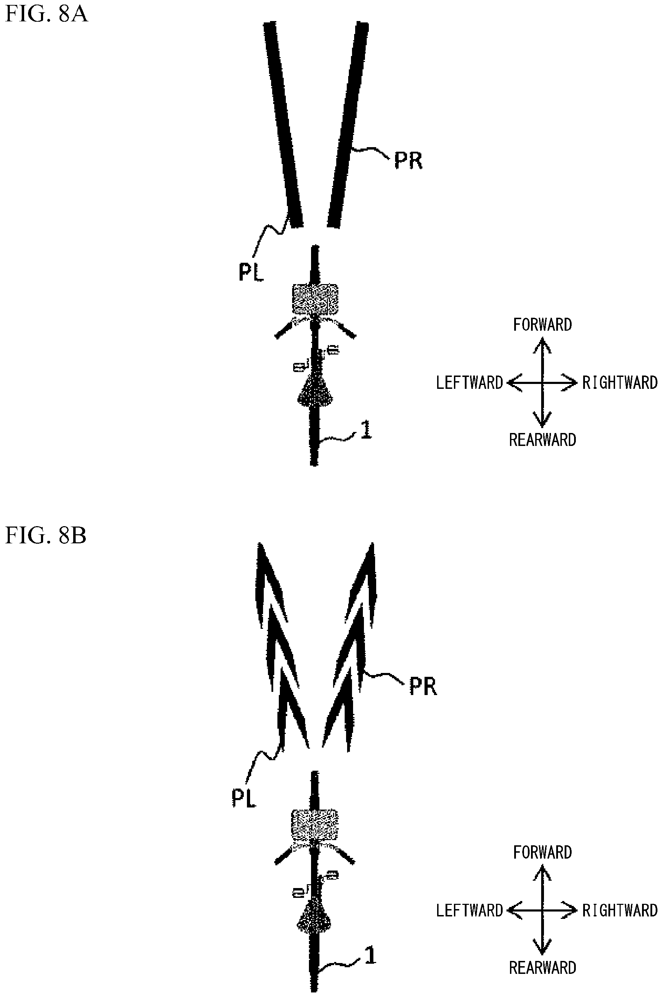

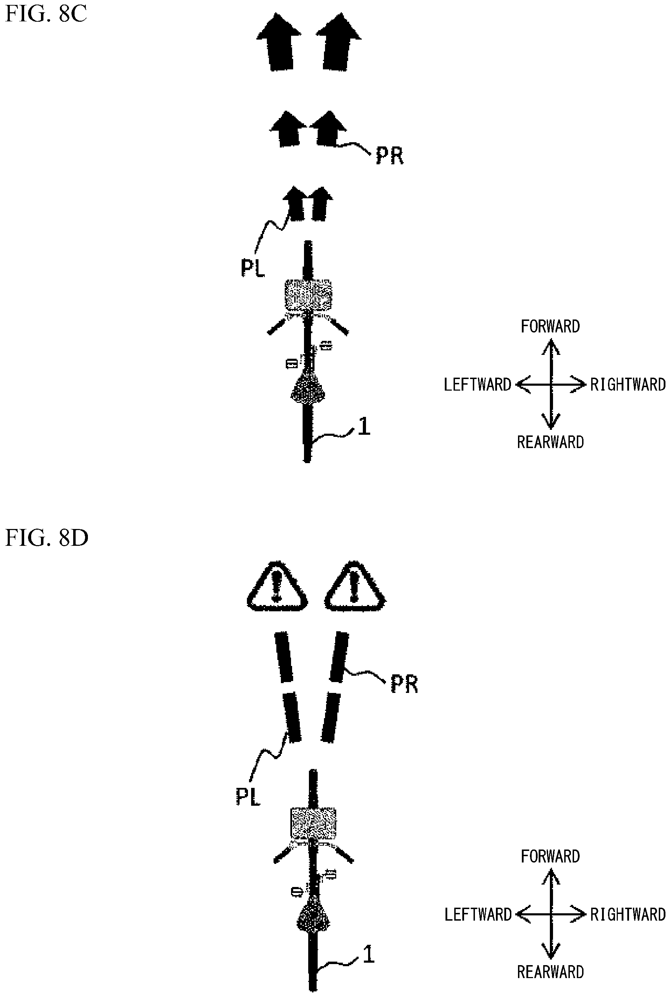

FIG. 8A, FIG. 8B, FIG. 8C and FIG. 8D are plan views of designs that exemplify specific examples of patterns of road surface drawing in the road surface irradiating patterns PL and PR shown by dotted lines in FIG. 7. FIG. 8A, FIG. 8B, FIG. 8C, FIG. 8D exemplify four types of road surface drawing pattern, and in each drawing, a road surface irradiating pattern PL and a road surface irradiating pattern PR are laterally symmetrical about the bicycle in front of the bicycle 1. FIG. 8A shows a straight-line design, and FIG. 8B and FIG. 8C show arrow-shaped designs indicating the direction of advance of the bicycle 1. FIG. 8D shows a design that combines a geometric figure with a message. Regardless of the road surface drawing patterns, since the road surface irradiating patterns PL and PR are projected onto the road surface while overlapping the central light emitting unit 11 that illuminates the light distribution pattern for a bicycle headlight, compared to the case where only the central light emitting unit 11 is used, the amount of irradiation onto the road surface is increased, making the road surface in the vicinity of the bicycle brighter and making it easier to drive. In addition, it is possible to let people around the bicycle 1 know of the bicycle's presence without having to look directly at it. In particular, this further increases safety because it does not produce upward light that would be dazzling to drivers of oncoming vehicles, but instead alerts them to its presence through road surface drawing. In addition, if the design with a message is provided in the projected image, it is possible to provide the message to those around the vehicle.

If the road surface drawing patterns in the road surface irradiating patterns PL and PR are small, it will be less recognizable from the surroundings. The effect of illuminating the area in front of the bicycle and increasing its visibility for the driver of bicycle 1 is also small. The drawing size when drawing 4 m ahead is small if it is equal to or less than 0.5 m. A drawing size of around 1 m, between 0.8 m to 2 m, provides a good balance between recognition and illuminating function, and allows the lamp unit to be made smaller. In addition, recognizability can be further improved by using colored light other than white for the light emitted. By using a light color other than white, it is possible to make presence of the vehicle known without blending in with surrounding light such as street lights or security lights. Since the human eye has a high visual sensitivity to green, it is preferable to use a green color.

### (Second embodiment)

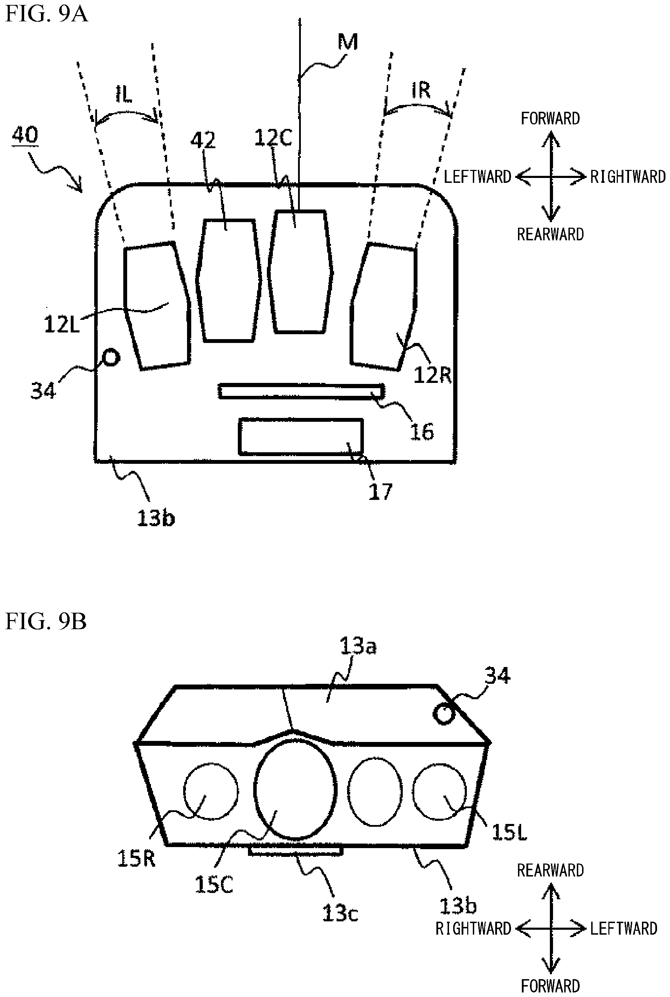

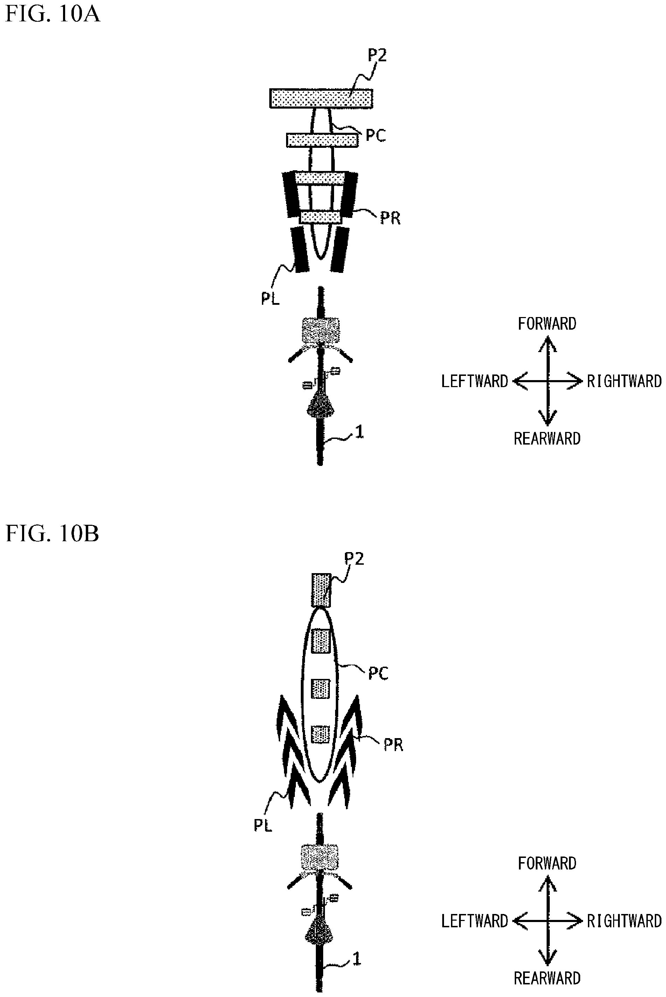

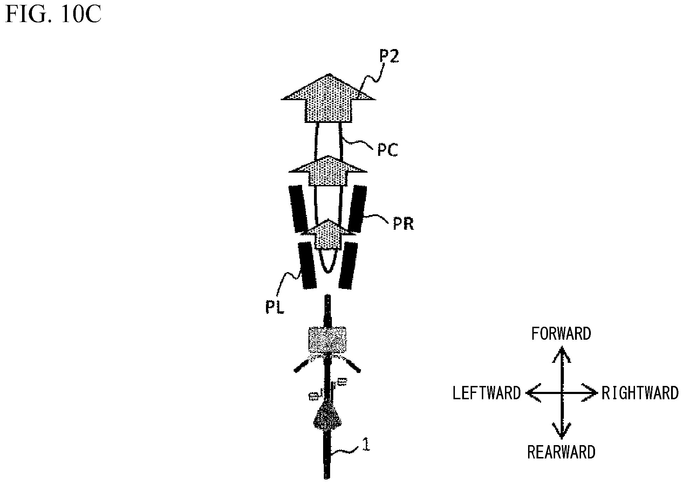

Next, a bicycle lighting device according to a second embodiment of the present invention will be described with reference to FIG. 9A, FIG. 9B and FIG. 10. FIG. 9A and FIG. 9B are schematic views showing the bicycle lighting device of the second embodiment, FIG. 9A is a schematic view for describing a horizontal direction cross section, and FIG. 9B is a front view. In the first embodiment, while the three lamp units including the central light emitting unit 11 that functions as the headlight 11 and the pair of drawing lamp units 12 provided on both sides of the central light emitting unit 11 are provided in the bicycle lighting device 10, the second embodiment is the same as the first embodiment in that a bicycle lighting device 40 includes the three lamp units including the central light emitting unit 11 that functions as the headlight 11 and the pair of drawing lamp units 12, but distinguished from the first embodiment in that the bicycle lighting device 40 further includes a second drawing lamp unit 42 provided between the central light emitting unit 11 and the drawing lamp unit 12. In addition, the illuminance sensor 34 is installed at a position near a center in a forward/rearward direction. Since the other parts are the same as the first embodiment, they are designated by the same reference signs and description thereof will be omitted.

### (Second drawing lamp unit)

The second drawing lamp unit 42 is disposed between the central light emitting unit 11 and the left light emitting unit 12L. The second drawing lamp unit 42 has the same configuration as that of the light emitting unit 12 described in the first embodiment, and is able to draw a predetermined image onto a road surface. The second drawing lamp unit 42 draws an image on the road surface in front of the bicycle 1 while overlapping the road surface irradiating pattern PC radiated by the central light emitting unit 11. In addition, a road surface irradiating pattern P2 by the second drawing lamp unit 42 is irradiated to be at least partially located at a position between the road surface irradiating pattern PL radiated by the left light emitting unit 12L and the road surface irradiating pattern PR radiated by the right light emitting unit 12R. The second drawing lamp unit 42 may be installed between the central light emitting unit 11 and the right light emitting unit 12R, or on both sides of the central light emitting unit 11. Since the image is drawn while overlapping the road surface irradiating pattern PC, it is preferable to be installed near the central light emitting unit 11. Further, similar as the central light emitting unit 11 and the drawing lamp unit 12, turning on/off of the second drawing lamp unit 42 is also controlled by a fourth lamp control part (not shown) connected to the control board 17.

FIG. 10 is a schematic plan view for describing a road surface irradiating pattern radiated by the bicycle lighting device. Mainly, a region within 6 m in front of the bicycle is schematically shown. Three types of examples of FIG. 10 (A), FIG. 10 (B) and FIG. 10(C) are shown. In the drawing of each of FIGS. 10(A) to 10(C), a range surrounded by an ellipse shown at a center in front of the bicycle 1 schematically shows an irradiation region of the road surface irradiating pattern PC radiated by the central light emitting unit 11. The road surface irradiating pattern PC also irradiates the road surface farther away than the drawing lamp units 12L and 12R and the second drawing lamp unit 42, but is shown in a simplified manner in FIG. 10 for ease of explanation. In FIG. 10(A), the drawing lamp units 12L and 12R form the road surface irradiating patterns PL and PR that draw straight lines extending in two diagonal longitudinal directions, respectively, and the second drawing lamp unit 42 draws an image of four straight lines extending horizontally at a position overlapping the road surface irradiating pattern PC, with the width of the lines increasing as they go farther away. In FIG. 10(B), each of the drawing lamp units 12L and 12R draws an image simulating a plurality of arrow shapes extending diagonally vertically, and the second drawing lamp unit 42 draws four rectangular images at a position overlapping the road surface irradiating pattern PC. In FIG. 10(C), the drawing lamp units 12L and 12R form the road surface irradiating patterns PL and PR, each of which draws two straight lines extending diagonally vertically, and the second drawing lamp unit 42 draws an image in which three arrows, each becomes larger as they go on the far side, overlap the road surface irradiating pattern PC. Further, the drawing patterns are not limited to these examples and can have a variety of shapes.

In FIG. 10(A), the four rectangular images drawn at the position overlapping the road surface irradiating pattern PC extend to the side of the irradiation region of the road surface irradiating pattern PC radiated by the central light emitting unit 11. As in this case, when the pattern radiated by the second drawing lamp unit 42 illuminates an area further to the side than the irradiation region of the road surface irradiating pattern PC, the left light emitting unit 12L and the right light emitting unit 12R may be omitted and the second drawing lamp unit 42 may be given the functions of the left light emitting unit 12L and/or the right light emitting unit 12R. In addition, it is also obvious that the pattern radiated by the second drawing lamp unit 42 is not limited to the straight lines shown in FIG. 10(A) and may be another pattern.

While the embodiments of the present invention have been described above, the above-mentioned embodiments and variations are merely illustrative in all respects. The present invention should not be construed as being limited by these descriptions. Additions, omissions, substitutions, and other modifications of configurations may be made in various other ways without departing from the scope of the present invention. For example, a signal may be input to the lighting drive circuit 30 in response to a braking operation of the bicycle 1, and based on the input signal corresponding to the braking operation, the timing of the lighting or blinking interval or the emission color of the drawing lamp unit 12 may be changed in response to the braking operation, making it easier for people in the vicinity to recognize that the brake is being applied. In addition, further, for example, a sensor element such as an acceleration sensor can be installed in the bicycle lighting device 10 or 40, a change in the center of gravity of the bicycle 1 can be determined according to a sensor signal from the acceleration sensor or the like, a left turn operation, a right turn operation, or a braking operation can be determined depending on the change in the center of gravity of the bicycle, only the left light emitting unit 12L of the drawing lamp unit 12 can be turned on if it is a left turn operation, and only the right light emitting unit 12R can be turned on if it is a right turn operation. Further, in this embodiment, the left light emitting unit 12L and the right light emitting unit 12R are separate light emitting units from the central light emitting unit 11, but common parts may be used to integrate them.

### [Industrial Applicability]

The present invention can be applied not only to general bicycles but also to electrically assisted bicycles. In addition, it can also be applied to kick scooters equipped with headlights. Like the light distribution pattern for a bicycle headlight, headlights of vehicles other than the vehicles, such as automobiles and motorcycles traveling on roads, which have a headlight with a narrow light distribution pattern in the leftward/rightward direction are considered to be included in the bicycle headlights in the present invention, and can be applied to a front illuminating device equipped with such bicycle headlights.

### [Reference Signs List]

1 Bicycle
10, 40 Bicycle lighting device (front illuminating device for bicycle)
11 Central light emitting unit (headlight)
11a LED light source
11b Thermal conductive board (light source board)
11c Reflector
11c1 Reflecting surface
12 Drawing lamp unit
12L Left light emitting unit
12R Right light emitting unit
13 Housing (case)
13c Fixing part
14 Lamp chamber
15 Outer lens
16 Battery
17 Control board
21 LED light source
22 Thermal conductive board (light source board)
23 Condenser lens
24 Projection lens
25 Image forming part
26 Outer frame
30 Lighting drive circuit
34 Illuminance sensor
35 Power source control circuit
36 External power source
37 Blinking circuit
42 Second drawing lamp unit
M Centerline
PC Road surface irradiating pattern (central light emitting unit)
PL Road surface irradiating pattern (left light emitting unit)
PR Road surface irradiating pattern (right light emitting unit)
P2 Road surface irradiating pattern (second drawing lamp unit)

## Claims

1. A bicycle lighting device comprising:
a central light emitting unit that is provided in a central region when seen in a front view and that is configured to emit light forward;
a right light emitting unit that is provided to be shifted rightward from a centerline of the central light emitting unit when seen from the centerline and that is configured to emit light toward a closer area at right front compared to the central light emitting unit;
a left light emitting unit that is provided to be shifted leftward from the centerline of the central light emitting unit when seen from the centerline and that is configured to emit light toward a closer area at left front compared to the central light emitting unit;
a control board including a lighting drive circuit configured to control a lighting status of each of the central light emitting unit, the right light emitting unit and the left light emitting unit; and
a housing including a lamp chamber configured to accommodate the central light emitting unit, the right light emitting unit, the left light emitting unit and the control board,
wherein the housing is provided with a fixing part to fix the housing to a bicycle,
a drawing optical system constituted by an LED light source and an image forming part, which is provided in front of the LED light source in an irradiating direction of the LED light source, is provided in at least one of the right light emitting unit and the left light emitting unit, and
the drawing optical system is configured to emit irradiation light so as to draw a predetermined image toward a road surface which is closer compared to a light distribution pattern of the central light emitting unit.

2. The bicycle lighting device according to claim 1, wherein the image forming part of at least one of the right light emitting unit and the left light emitting unit includes an image film fixing frame in at least one of the right light emitting unit and the left light emitting unit, and has an image film that is able to be inserted into or removed from the image film fixing frame.

3. The bicycle lighting device according to claim 1, wherein the image forming part of at least one of the right light emitting unit and the left light emitting unit is a variable image forming part configured to change a design using an electrical means.

4. The bicycle lighting device according to any one of claims 1 to 3, wherein the control board includes a first control part configured to control a lighting status of a light source of the central light emitting unit, and a second control part configured to control a lighting status of a light source of each of the right light emitting unit and the left light emitting unit,
the first control part performs continuous lighting according to an output signal of an illuminance sensor or a switching operation, and
the second control part performs blinking lighting independently from the lighting of the light source of the central light emitting unit by the first control part.

5. The bicycle lighting device according to any one of claims 1 to 4, wherein the light source of each of the central light emitting unit, the right light emitting unit and the left light emitting unit is an LED.

6. A bicycle comprising the bicycle lighting device according to any one of claims 1 to 5.
